Europäisches Patentamt

(19) European Patent Office

Office européen des brevets

(11) Publication number: **0 067 052**
**A2**

## (12) EUROPEAN PATENT APPLICATION

(21) Application number: 82302894.9

(22) Date of filing: 04.06.82

(51) Int. Cl.³: **G 05 D 3/10, A 63 H 30/02**

(30) Priority: 04.06.81 ZA 813750

(43) Date of publication of application: 15.12.82
Bulletin 82/50

(84) Designated Contracting States: **AT BE CH DE FR GB IT LI LU.NL SE**

(71) Applicant: **DIGICOR (PROPRIETARY) LIMITED, 132 Jan Smuts Avenue Parkwood, Johannesburg Transvaal (ZA)**

(72) Inventor: **Mansel-James, Walter Keith, 23 Orange Road Emmarentia, Johannesburg Transvaal (ZA)**

(74) Representative: **Parker, Jeffrey et al, Frank B. Dehn & Co. Imperial House 15-19 Kingsway, London, WC2B 6UZ (GB)**

(54) Audio sensing apparatus.

(57) A directional audio sensing device has two microphones (10, 12) which respond to audio signals and provide corresponding electrical signals. The electrical signals are compared and current is generated at a terminal 28 to drive a motor 30 in one or other direction according to the relative direction from which the audio signals are received. The motor is used to rotate an artificial flower. The apparatus is arranged so that the flower turns towards the source of any audio signals generated in its vicinity.

0067052

- 2 -

## BACKGROUND OF THE INVENTION

THE invention relates to audio sensing apparatus.

The invention relates more particularly to directional audio sensing apparatus for use in controlling a prime mover and for use in toys and like devices.

## SUMMARY OF THE INVENTION

According to the invention a directional audio sensing apparatus comprises two or more audio sensors separated from one another and arranged to produce respective electrical signals corresponding to audio signals received thereby, electrical circuit means arranged to compare the electrical signals and provide a directional drive signal, a prime mover arranged to respond to the drive signal and to move towards a position corresponding to the relative direction of a source of the audio signals from the apparatus.

The audio sensors may be arranged to respond to audio signals only over a predetermined magnitude range and/or predetermined frequency range.

Alternatively or in addition, the electrical circuit means may be arranged to respond to electrical signals over a predetermined range of amplitude and/or frequency.

The apparatus may include an electrical motor comprising the prime mover. The apparatus may include means for limiting the movement in one or both directions of the prime mover beyond a predetermined position or positions.

BRIEF DESCRIPTION OF THE DRAWINGS

A directional audio sensing apparatus according to the invention will now be described by way of example with reference to the accompanying drawings in which:-

Figure 1 shows an electrical circuit of the apparatus;

Figure 2 shows part of an electrical circuit associated with a motor in the apparatus;

Figure 3 shows an artificial flower incorporating the apparatus of Figures 1 and 2; and

Figure 4 shows a different circuit of the apparatus.

DESCRIPTION OF A PREFERRED EMBODIMENT

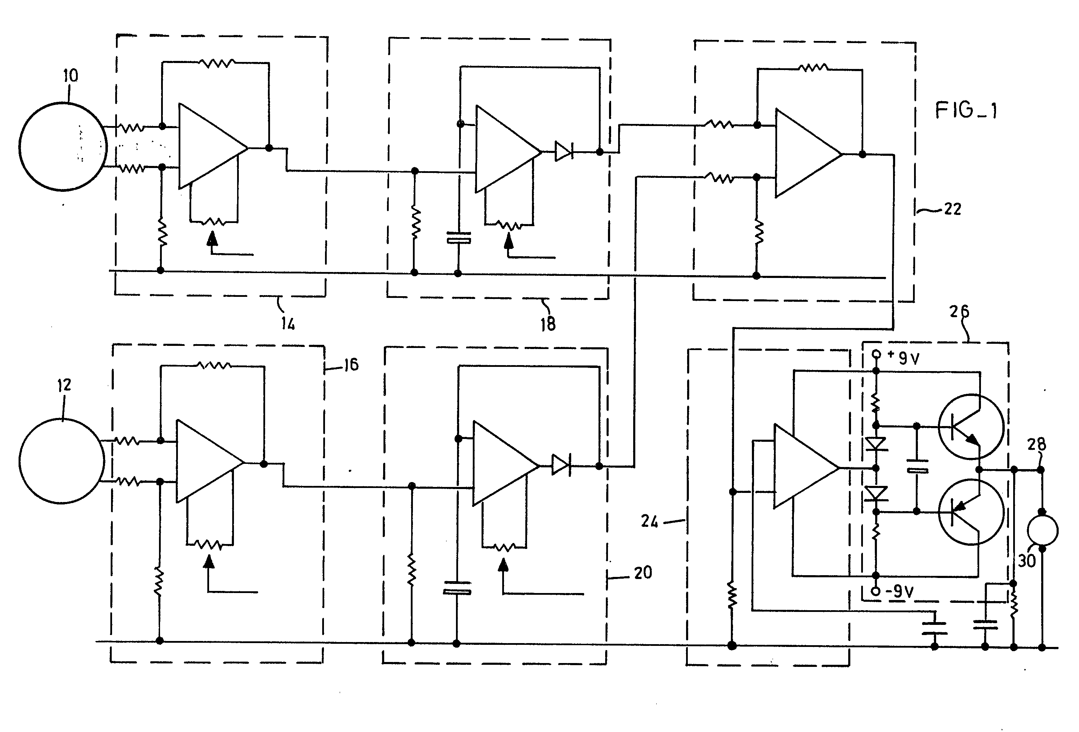

Referring to the drawings, in Figure 1 two microphones 10 and 12 are connected respectively to pre-amplifiers 14 and 16. Electrical signals from outputs of the pre-amplifiers are fed via respective peak detectors 18 and 20, which also rectify the signals, to a comparator circuit 22 which provides an output corresponding in magnitude and polarity to the difference of its input signals. A voltage follow circuit 24 supplies the difference signal via a transistor circuit 26 arranged to provide a current drive signal and via an output terminal 28 to a motor 30.

In use, if audio signals are picked up by the microphones 10 and 12 electrical signals are generated corresponding thereto. If the source of the audio signals is nearer to the microphone 10 than the microphone 12 the electrical signals produced by the microphone 10 are the greater. The difference in magnitudes is recognised by the circuit 22 and a positive (say) polarity drive current is consequently supplied to the motor 30 which rotates the motor 30 in a first direction. Similarly, if the audio signals received by the microphone 12 are greater, then the motor 30 is driven in an opposite direction. Normally, as when say two persons are talking to one another, audio signals will be received by the apparatus which appear firstly greater to the microphone 10 corresponding to the one person speaking and then greater to the microphone 12 as the other person speaks. This means the motor 30 is driven first in one direction and then in the other direction as the two persons speak in turn. By attaching some indicating or display device to the motor, the indicating or display device can be arranged to move in corresponding one and opposite directions as each person speaks.

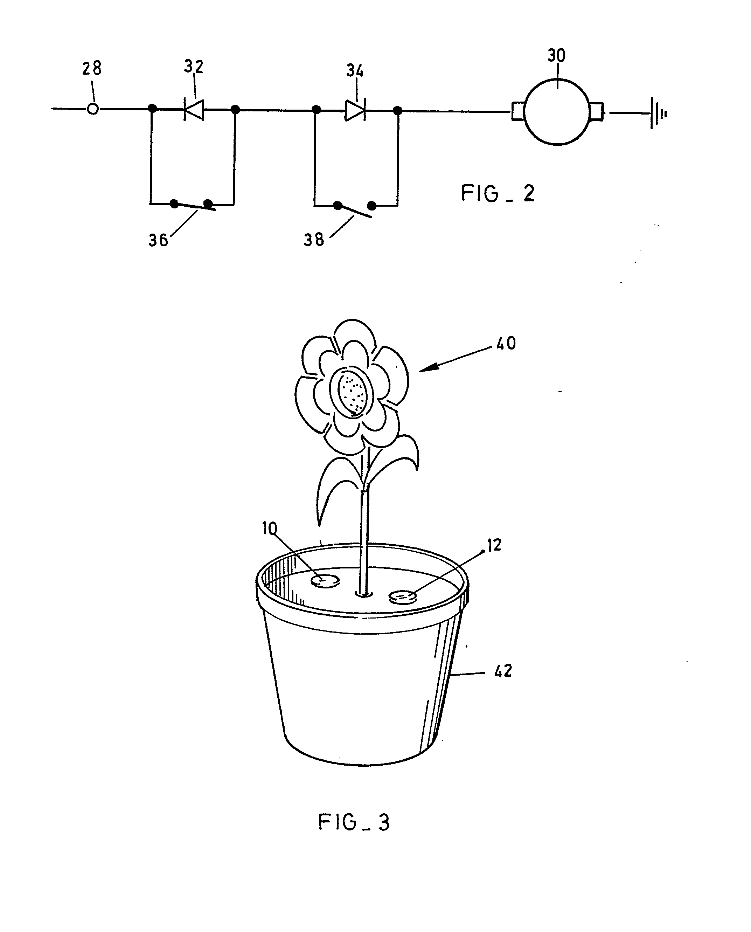

The arrangement described may be unsatisfactory if sound is continuously generated at one position, from one of the persons if that person talks continuously, for example. In order to overcome this problem, movement limiting arrangements can be incorporated as explained with reference to Figure 2.

Referring to Figure 2, opposing diodes 32 and 34 are connected in series between the output terminal 28 and the motor 30. Each diode has a by-pass circuit including a respective switch 36 and 38. The switches 36 and 38 are mechanically coupled directly to the motor 30, or to the indicating or display device as the case may be, and arranged to be opened whenever the motor 30 has rotated to extreme ends of its range of desired rotational motion. Thus, in the example described if a positive polarity current is continuously applied to the motor 30, the motor 30 will rotate until it reaches one extreme position whereupon the switch 38 will be opened (as shown in Figure 2). Further, positive polarity currents thereafter supplied to the terminal 28 cannot be supplied to the motor 30 until the switch 38 is again closed.

In the example described above, if the one person speaks, the motor 30 will rotate to the one extreme position and remain there. When the other person speaks a negative polarity current can be supplied to the motor, via the closed switch 36, so that the motor 30 moves in the opposite direction away from the one extreme position.

In like manner, if the other person continues to speak the motor 30 will continue to move in its opposite direction until it reaches its other extreme position, whereupon the switch 36 is opened to prevent further rotation of the motor 30 in the opposite direction.

In Figure 3, the artificial flower 40 in a plant pot 42 is arranged to be controlled by the apparatus described above. If the two people are adjacent the flower 40 and talk to each other, or to the flower 40, the flower 40 is arranged to turn towards and face the person who is speaking at the time. The flower 40 will also respond to other audio signals generated by snapping of fingers, whistles and the like.

The apparatus described may be tuned by selection of microphones 10 and 12 or, by altering the capacitance values of the capacitors shown in the peak detectors for example, to respond to narrow or specific ranges of audio frequences. Likewise, the sensitivity to levels of noises may be adjusted in conventional manner by circuit adjustments. In this way, the flower 40 or other devices controlled by the apparatus, may be designed to respond generally only to human voices and be made less sensitive than otherwise to extraneous noises, such as traffic noise.

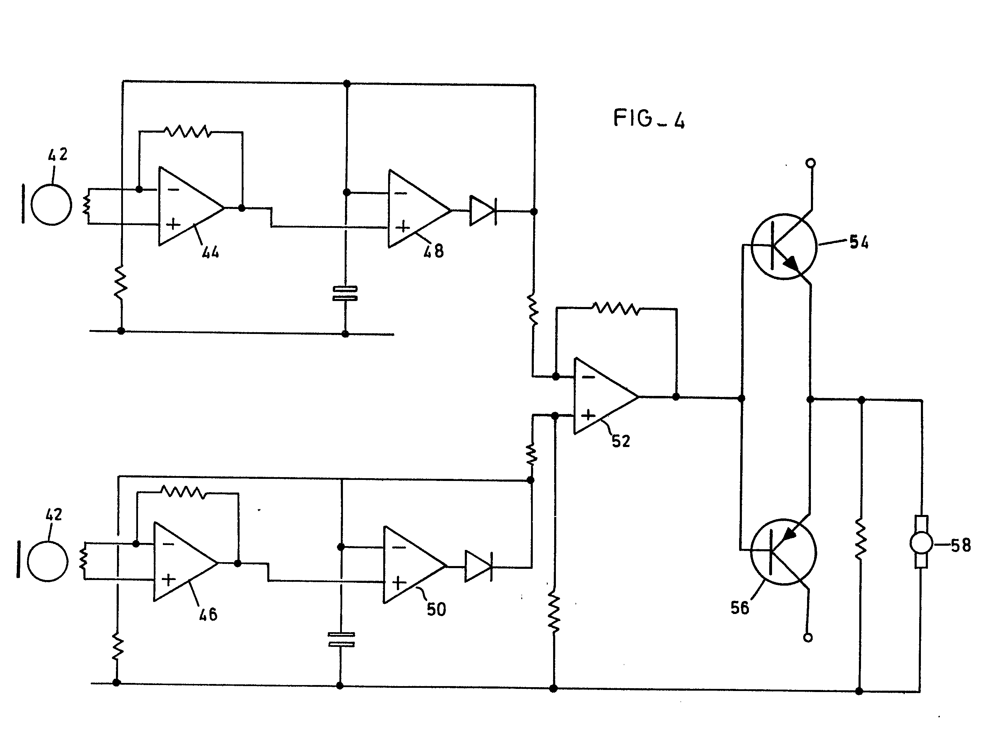

In Figure 4, the circuit is arranged to compare signals from microphones 40 and 42 which are fed respectively via pre-amplifiers 44 and 46 and amplifiers 48 and 50 to a differential amplifier 52. Transistors 54 and 56 are serially connected between a +9V supply and a -9V supply and switching of the transistors 54 and 56 is controlled by the output of the amplifier 52 to supply a position or negative drive current to a D.C. motor 58.

Thus, the motor 58 is driven in a first or opposite direction according to the comparative magnitudes of sound picked up by the microphones 40 and 42 in the same manner as described with reference to Figure 1.

Other applications of the apparatus include control of the direction of travel of a mechanically driven mouse or like toy. In such a case the limiting arrangement in Figure 2 may be eliminated if desired, although such an arrangement may be used to prevent the turning mechanism being driven to too extreme a position. In any event as the mouse turns, to follow a noise source, its microphones, mounted on either side of the mouse say, also turn with the mouse so that drive currents supplied to the motor 30 are only generated as the direction of the source changes relative to time-being orientation of the mouse.

Another application of the apparatus comprises an airborne sphere or like device incorporating a propelling motor. The apparatus is used to control the direction of movement of the sphere, or its relative rotational disposition, such that the sphere will turn as required to follow any noise or noises picked up by the microphones.

Normally, and for use in toys and the like only two microphones are used. It will be appreciated however that three or more microphones may be used, and electrical signals produced in accordance with audio signals received thereby compared and used to drive a prime mover in an appropriate direction.

0067052

CLAIMS:

1.

A directional audio sensing apparatus comprises two or more audio sensors separated from one another and arranged to produce respective electrical signals corresponding to audio signals received thereby, electrical circuit means arranged to compare the electrical signals and provide a directional drive signal, a prime mover arranged to respond to the drive signal and to move towards a position corresponding to the relative direction of a source of the audio signals from the apparatus.

2.

A directional audio sensing apparatus according to claim 1, in which the audio sensors are arranged to respond to audio signals within a limited range of the audio frequencies.

3.

A directional audio sensing apparatus according to claim 1 or 2, in which the electrical circuit is arranged to respond to electrical signals derived from the audio sensors over a limited range of values correspondin to a limited range of audio frequencies received by the microphones.

4.

A directional audio sensing apparatus according to any of claims 1 to 3, in which the electrical circuit is arranged to respond to electrical signals derived from the audio sensors corresponding to a limited range of amplitudes of audio signals received by the microphones.

5.

A directional audio sensing apparatus according to any of claims 1 to 4, in which the prime mover comprises an electrical motor.

6.

A directional audio sensing apparatus according to any of claims 1 to 5, including means for limiting the movement of the prime mover in one or both directions beyond a predetermined position or positions.

7.

A directional audio sensing apparatus according to claim 6, in which said limiting means comprises means for electrically isolating the prime mover from the electrical circuit means whenever the prime mover is at the predetermined position or positions.

8.

An artificial flower, toy or like device including apparatus according to any of the preceding claims, arranged to be moved or adopt a relative displacement in response to audio signals received by the apparatus.

FIG_1

28  32  34  30

FIG_ 2

36  38

40

10  12

42

FIG_ 3

0067052

FIG_4